# EUROPEAN PATENT SPECIFICATION

(11) **EP 1 458 502 B1**
(45) Date of publication and mention of the grant of the patent: **24.08.2005**
(21) Application number: 02785082.5
(22) Date of filing: 25.10.2002
(51) Int. Cl.: B08B 3/02, A22B 5/00

(54) **METHOD AND SYSTEM FOR CLEANING OF WORKING UTENSILS, IN PARTICULAR IN THE FOOD PROCESSING INDUSTRY**
VERFAHREN UND SYSTEM ZUM REINIGEN VON ARBEITSUTENSILIEN, INSBESONDERE IN DER NAHRUNGSMITTELVERARBEITUNGSINDUSTRIE
PROCEDE ET SYSTEME POUR NETTOYER DES USTENSILES, UTILISES EN PARTICULIER DANS LE DOMAINE DE L'INDUSTRIE ALIMENTAIRE

(30) Priority: 29.10.2001 DK 200101593; 09.04.2002 DK 200200526
(43) Date of publication of application: 22.09.2004
(73) Proprietor: Gjerstrup Trading A/S, 3460 Birkeroed (DK)
(72) Inventor: NEUBERT, Bent, DK-2840 Holte (DK)
(74) Representative: Raffnsoee, Knud Rosenstand
(86) International application number: PCT/DK2002/000712
(87) International publication number: WO 2003/037536

(56) References cited:
- EP-A1- 0 641 612
- WO-A2-00/69242
- FR-A1- 2 647 038
- US-A- 5 402 809

## Description

The present invention relates to a method for cleaning protective gloves, particularly in the food industry, comprising positioning of a number of protective gloves on mutually spaced, elongated holding members with each holding members projecting into the inner cavity of the glove positioned thereon and retaining said holding members in mainly stationary positions in a substantially closed cleaning installation for the duration of a cleaning process including pre-rinsing, washing and rinsing steps conducted by substantially nozzle-shaped sluicing means in the cleaning installation.

The food processing industry, for example slaughterhouses, uses tools for a number of work operations, substantially in the form of knives of various shapes and sizes that must be kept constantly sharply ground and the use of which therefore, for work safety reasons, requires use of protective equipment to avoid personal injuries.

It is particularly well-known to use metallic protective gloves made of chain mail weave to protect the user's hands and arms against serious cut lesions.

Like the actual work tools, such gloves must be frequently cleaned, typically several times during a work day, due to the constant contact with meat, fat and bone tissue which tends to stick in the chain mail weave, and the cleaning must be of a nature to maintain the desired level of hygiene.

EP-A-0 641 612 describes a cleaning installation for this purpose in the form of a two-floor tunnel for cleaning of both knives and protective gloves. The objects to be cleaned are placed in holders which are moved horizontally, by means of horizontally propelled carriages, through the tunnel floors and are moved between the two floors by means of lift devices in towers at the tunnel ends. The individual steps of the cleaning process are carried out in this installation by means of fixed sluicing nozzles in the towers and one of the tunnel sections.

Correspondingly, the applicant's international patent application WO 00/69242 describes a tunnel-shaped cleaning installation through which knives and protective gloves arranged on trolleys that can be rolled through the slaughterhouse can be passed for carrying out the cleaning process.

These prior-art arrangements are so extensive and complex with consequent high manufacturing and installation costs that they can substantially only be used in central cleaning installations in large slaughterhouses with resulting requirements of collection of knives and gloves from the different work areas of the slaughterhouse at the frequency required in view of hygiene demands. For practical use such arrangements are therefore relatively inflexible.

Moreover, the fact that knives and protective gloves are subjected to the same cleaning process means that the cleaning of protective gloves which typically present a substantially higher level of contamination thari knives due to the structure of the chain mail material often becomes inadequate.

To remedy these disadvantages, it is quite common to carry out cleaning of protective gloves by means of conventional industrial washing machines with a tumbler function. However, this solution presents the disadvantage that the protective gloves exhibit a considerable degree of entanglement after the cleaning process.

Against this background, it is the object of the invention to provide a simplified and improved method of cleaning work utensils in the food industry so that the cleaning can be carried out locally and at an improved hygiene level without comprehensive installations and the resulting costs.

In view of this object, a method of the type described according to the invention is characterized by arrangement of said holding members and the protective gloves positioned thereon in a configuration of columns in the cleaning installation with the glove openings localized mainly in a common plane and conducting at least said pre-rinsing step sequentially for one column at a time as a substantially directional sluicing from said sluicing means at an elevated sluicing pressure of at least 60 bar, the orientation of the protective gloves positioned on the holding members and the sluicing direction being adapted for discharge of contaminated sluicing medium through the glove openings.

Carrying out at least the pre-rinse, for which ordinary cold water is normally used, at a substantially increased sluicing pressure ensures, already in this part of the cleaning process, a substantially more efficient removal of meat, fat and bone remains that have stuck in the chain mail weave of a protective glove, and the mutually adapted orientations of the directional sluicing and the elongated protective gloves ensure that the gloves are secured on the stationary holding members and are not detached from them as a consequence of the increased sluicing pressure, and that the sluicing medium contaminated by meat, fat and bone tissue is passed out through the glove opening after having penetrated through the glove material from its exterior side.

The dependent claims 2 to 10 provide advantageous and suitable embodiments of the method.

For carrying out the method, the invention also comprises a system for cleaning protective gloves, particularly in the food industry, by carrying out the method according to any of the preceding claims, comprising a substantially closed cleaning installation for stationary retaining mutually spaced, elongated holding members for positioning of protective gloves for the duration of a cleaning process comprising the steps of pre-rinsing, washing and rinsing conducted by substantially nozzle-shaped sluicing means provided in said cleaning installation.

According to the method stated, such cleaning system according to the invention is characterized in that the holding members are arranged in a configuration of columns for retaining the protective gloves with the glove openings localized in a common plane, and that the sluicing means is connected with a high-pressure feeding unit for sluicing medium and are controlled to conduct at least said pre-rinsing step sequentially for one column at a time as a directional sluicing at an elevated sluicing pressure of at least 60 bar, the orientation of the holding members and the protective gloves positioned thereon and the sluicing direction being adapted for discharge of contaminated sluicing medium through the glove openings.

Advantageous and suitable embodiments of such system are stated in dependent claims 12 to 32.

In a fairly simple embodiment, the cleaning installation may thus comprise an upright, substantially box-shaped cabinet with a work chamber, in which said holding members and sluicing members are arranged, and an openable front door for said work chamber.

In this connection it is particularly advantageous if the holding members comprise mounting members fixed in said cabinet and separate elongated holding devices removably mountable on said mounting members and with connecting parts for releasable engagement with the mounting members.

The mounting members in the work chamber of the cabinet may thus comprise a first and/or a second type of mounting members placed partly in said column-row configuration on a vertical back wall of the cabinet and designed for removable mounting and securing of the connecting parts of the holding devices to produce said upwardly inclined orientation, partly individually in said column configuration secured in a substantially horizontal plane at the bottom of the cabinet work chamber and designed for removable mounting and securing of the connecting parts of the holding devices to produce said vertically projecting column orientation.

A particularly advantageous further development of the above simple embodiment is moreover characterized in that the holding members comprise mounting members in connection with a mobile support trolley which can be passed into and out of the cabinet through said front door. Thereby, other than cleaning of protective gloves, the system can be used in a simple manner also for cleaning of other kinds of work utensils in the form of, for example, knives and cutting boards. As the cabinet design claimed is also extremely favourable in price compared with prior-art central cleaning systems for slaughterhouses, this embodiment of the system according to the invention makes very flexible utilisation possible both in a central cleaning system which may comprise a number of cleaning cabinets, and in a local arrangement of cleaning systems in a large slaughterhouse, thus obviating the need for transportation of utensils to be cleaned over large distances and between different floors or height levels.

The invention will now be described in further detail below with reference to the schematic drawing, in which
Fig. 1 shows a simplified side view of an embodiment of a cleaning installation in a system according to the invention,
Fig. 2 is a corresponding, simplified top view of the installation of Fig. 1,
Fig. 3 shows a simplified diagram of a feeding and sluicing control system for use in the installation of Figs. 1 and 2,
Fig. 4 is an enlarged segment of a sluicing unit of the installation of Fig. 1,
Fig. 5 is an embodiment of a holding device and a stationary mounting member of a first type,
Figs. 6 and 7 are enlarged views of a connecting part of the holding device of Fig. 5,
Figs. 8 and 9 show an embodiment of a stationary mounting member of a second type,
Figs. 10 and 11 show schematic vertical and horizontal sectional views of an alternative cabinet design for a cleaning installation having a modified sluicing system and holding members for work utensils in the form of gloves, knives and cutting boards arranged on mobile support trolleys,
Figs. 12 and 13 schematically show details of the design of a high-pressure sluicing unit of the installation shown in Figs. 10 and 11, and
Figs. 14 to 22 are schematic side views of an alternative embodiment of the cabinet design of Figs. 10 and 11.

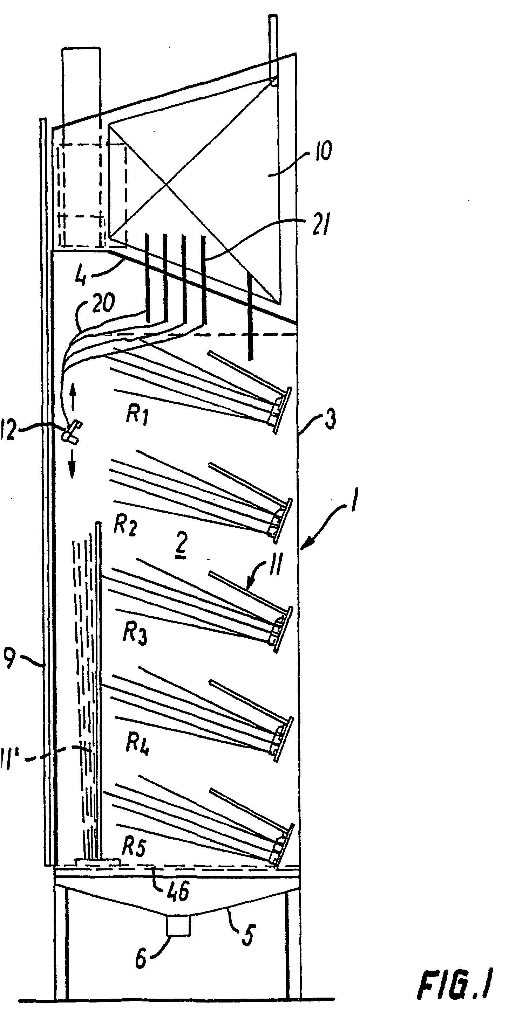

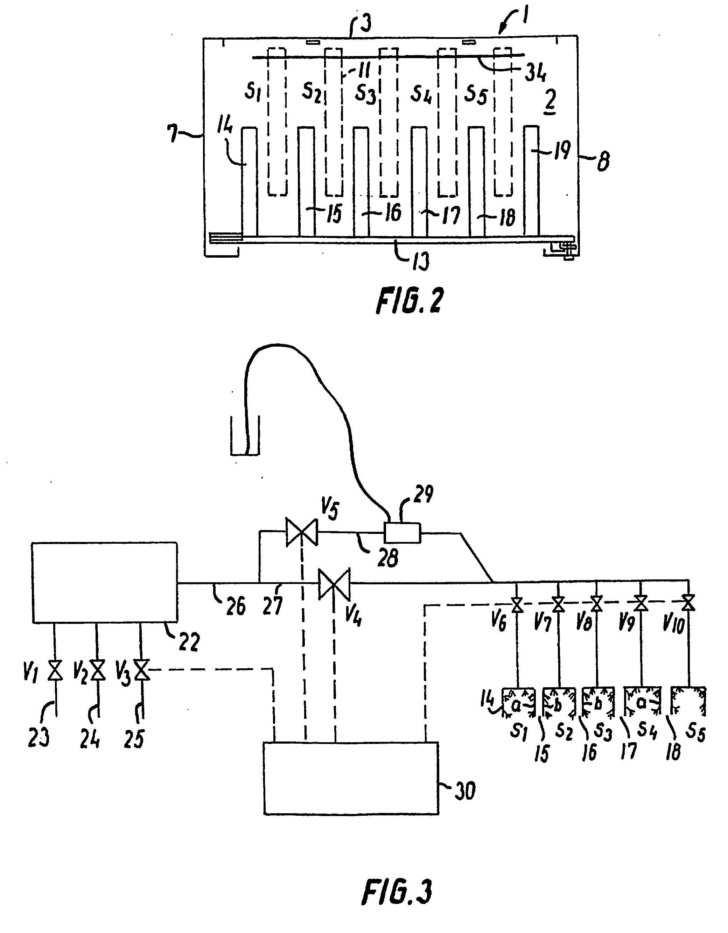

In the embodiment of Figs. 1 and 2, the cleaning installation of a system according to the invention comprises an upright, substantially box-shaped cabinet 1, in which a work chamber 2 is defined by a vertical back wall 3, a top wall 4, a trough-shaped bottom wall 5 with an outlet 6, side walls 7 and 8 and an openable front door 9. In an upper chamber 10 in the cabinet 1 above the top wall 4, a high-pressure feeding unit for sluicing medium is installed, the design of which is described in detail below by way of example with reference to Fig. 3.

Immediately in front of the vertical back wall 3, a column-row configuration of holding members 11 for metallic protective gloves with chain mail weave, not shown and known *per se*, is arranged. In the example shown, the individual holding members 11 of the column-row configuration are arranged in five columns S1-S5 each with five rows R1-R5, but the number may, of course, be varied in accordance with the dimensions of the cabinet, but with such mutual distance between neighbouring holding members 11 in the column-row configuration that they are kept completely free of each other during the individual phases of the cleaning process.

The cleaning process, which comprises at least the steps or phases of pre-rinse, wash and rinse, is carried out in the example shown by means of a joint sluicing unit 12 which is movable up and down in a vertical plane located outside the holding members 11, for example as shown in Fig. 1 near the openable front door 9. As seen most clearly in Fig. 2, the sluicing unit 12 may comprise a horizontally transverse main bar 13 with also horizontally projecting carrier members 14-19 with individual sluicing members associated with the columns S1-S5 in the column-row configuration of holding members as follows:

| COLUMN | CARRIER MEMBER |
|---|---|
| S1 | 14-15 |
| S2 | 15-16 |
| S3 | 16-17 |
| S4 | 17-18 |
| S5 | 18-19 |

As shown in Fig. 2, the length of the carrier members 14 is adapted so that the carrier members project in between the holding members 11 in each of the rows R1-R5. In the example shown, the sluicing unit 12 also comprises outer carrier members 14 and 19 between the outermost columns S1 and S5 and the respective side walls 7 and 8.

The vertical up-and-down movement of the sluicing unit may be provided by drive and transmission members, not shown and known per se, for example an electric motor arranged in the upper chamber 10 and chain drives extending along the side walls 7 and 8 of the cabinet 1.

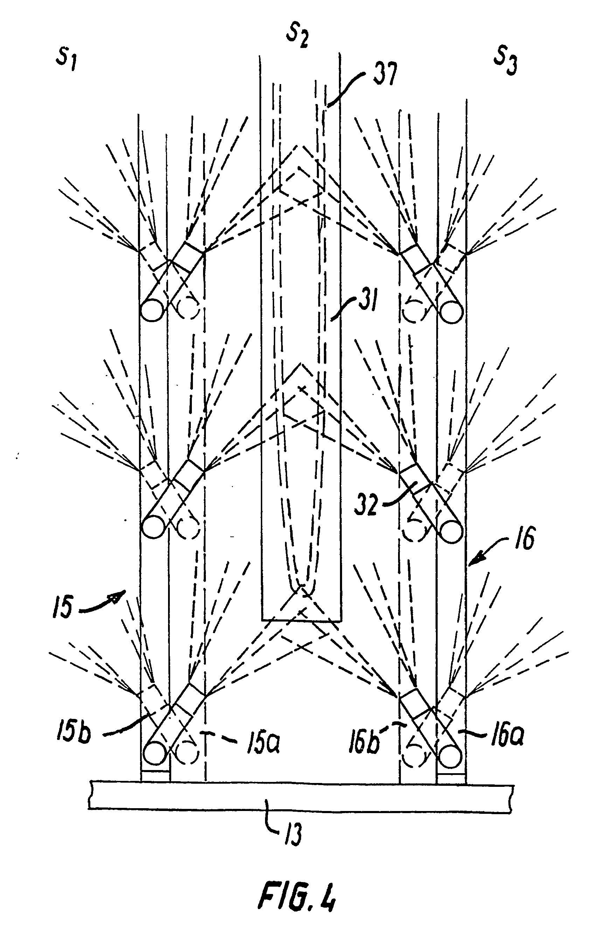

The individual sluicing members associated with the carrier members of the sluicing unit 12, the arrangement of which sluicing members is described below by way of example with reference to Fig. 4, are connected, as schematically indicated in Fig. 1, with the high-pressure feeding unit arranged in the upper chamber 10 via individual flexible hose connections 20 connected to pipe lead-ins 21 through the top wall 4.

In the example shown schematically in Fig. 3, the high-pressure feeding unit of the cleaning installation comprises an electrically driven high-pressure pump 22 which may be connected at its supply side via valves V1-V3 to feed conduits 23-25 for, for example, cold water, warm water at a temperature of about 60°C and hot water at a temperature of about 85°C. On the discharge side of the pump 22, a discharge conduit 26 branches to two valves V4 and V5. From the valve V4, the branch conduit 27 is passed direct to individual valves V6-V10 for the individual flow connections 20, 21 to the individual sluicing members of the sluicing unit 12 on the carrier members 14-19. From the valve V5, the branch conduit 28 is passed to a dispensing device 29 for addition of detergent or disinfectant and from there to the valves V6-V10.

The individual control valves V1-V9 of the feeding unit are controlled from a joint programme-controlled control device 30.

According to the invention at least the pre-rinse step of the cleaning process is carried out at an increased aggregate sluicing pressure from the sluicing members of at least 60 bar. In practice, with the embodiment of Figs. 1 and 2 it has proved suitable to use a sluicing pressure of, for example, 180 bar for efficient pre-rinse of protective gloves. The pump 22 must thus be dimensioned to supply this sluicing pressure.

Of the other steps of the cleaning process, at least the wash or disinfection with the addition of detergent or disinfectant should be carried out at a lower sluicing pressure in consideration of the water consumption. The rinse can be carried out at the same lower sluicing pressure as the washing or disinfecting step, but alternatively at the same increased sluicing pressure as the pre-rinse.

As a consequence of the type of the contaminating components typically found in the chain mail weave of protective gloves, the pre-rinse should always be carried out with ordinary cold water, while for the washing or disinfecting step warm or preferably hot water is used.

As a non-limiting guiding example, the control of the valves V1-V9 may be carried out according to the below table, the figure designations 0 and 1 being used to indicate closed and open valve, respectively, and subject to the assumption that the valves V6-V10, as shown in Fig. 3, are associated with the carrier members 14-19 of the sluicing unit 12 and thus with the columns S1-S5 as follows:

| | | | |
|---|---|---|---|
| S1 | V6 | S4 | V9 |
| S2 | V7 | S5 | V10 |
| S3 | V8 | | |

| VALVE | PRE-RINSE | WASH/DISINFECTION | RINSE |
|---|---|---|---|
| V1 | 1 | 0 | 1 |
| V2 | 0 | 0/1 | 0 |
| V3 | 0 | 1/0 | 0 |
| V4 | 1 | 0 | 1 |
| V5 | 0 | 1 | 0 |
| V6 | 1 (S1) 0 (S2-S5) | 1 | 1 |
| V7 | 1 (S2) 0 (S1,S3-S5) | 1 | 1 |
| V8 | 1 (S3) 0 (S1,S2,S4,S5) | 1 | 1 |
| V9 | 1 (S4) 0 (S1-S3,S5) | 1 | 1 |
| V10 | 1 (S5) 0 (S1-S4) | 1 | 1 |

As will appear from the table, the increased sluicing pressure in the pre-rinse step is provided by sequential actuation of the valves V6-V10 so that the sluicing at this step is carried out for a single column at a time, while the sluicing in the washing and rinsing steps is carried out with all valves V6-V10 open, that is, simultaneously for all holding members 11 in the column-row configuration and the protective gloves placed thereon, whereby it is assumed that the volumetric flow volume of cold or hot water discharged from the pump 22 is the same at all steps.

In the segment of the sluicing unit 12 shown in Fig. 4, two of the carrier members 15 and 16 projecting from the main bar 13 project on respective sides of a glove 31 placed on one of the holding members 11 in the column S2 in the column-row configuration shown in Figs. 1 and 2. As will appear, each of the carrier members 15 and 16 comprises two close-lying projecting pipe members 15a, 15b and 16a, 16b, which each has three sluicing nozzles 32 connected. The nozzles 32 connected to the pipe members 15b and 16a are oriented obliquely inwards towards the glove 31 belonging to the column S2, while the nozzles 32 connected to the pipe members 15a and 16b are oriented obliquely outwards towards gloves, not shown, placed on holding members 11 in the neighbouring columns S1 and S3, respectively.

In the example shown, all nozzles 32 are oriented in a substantially horizontal plane in view of the directional orientation of the holding members 11 described below, but alternatively they may be oriented in a slightly downwardly inclined direction.

As further appears from the above, the two pipe members belonging to the same carrier member are connected via hose couplings, not shown, to the hose connections 20 to a respective one of two of the valves V6-V10. The pipe members 15a and 15b belonging to the carrier member 15 are thus connected with the valves V6 and V7, respectively, while the pipe members 16a and 16b are connected with the valves V7 and V8.

Of the other carrier members of the sluicing unit 12, the carrier members 17 and 18 are designed in the same way as shown and described for the carrier members 15 and 16, while each of the outermost carrier members 14 and 19 only comprises a single pipe member connected to the valves V6 and V10, respectively.

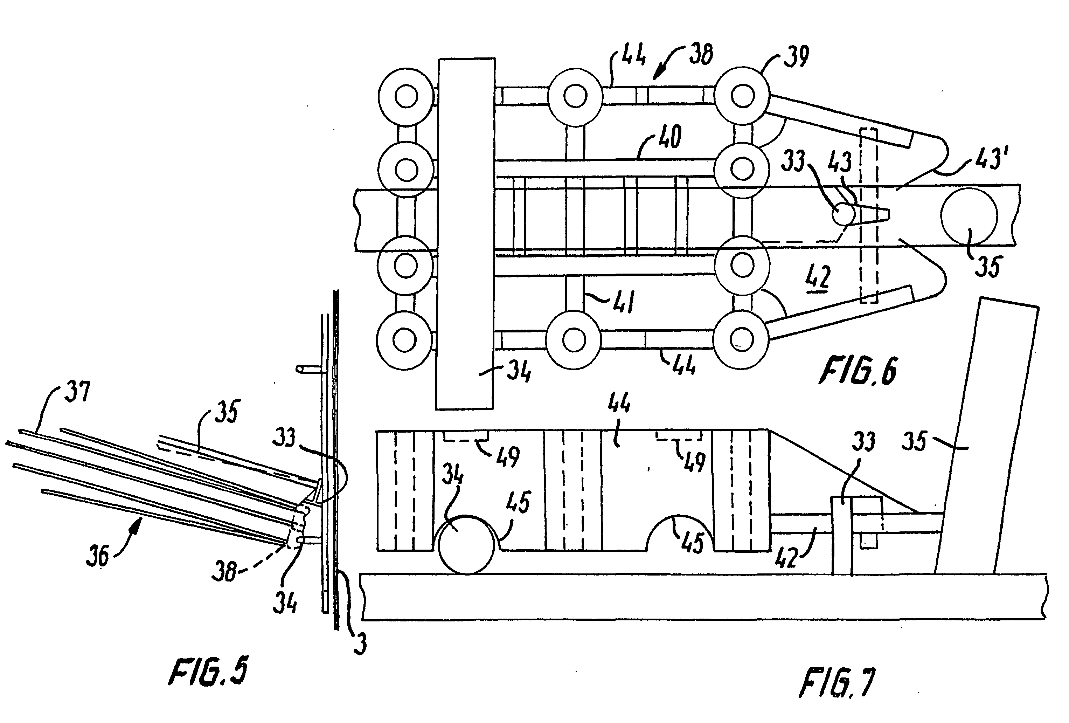

Fig. 5 shows a side view of a preferred embodiment of the holding members 11 arranged in stationary positions in a column-row configuration and secured to the vertical back wall 3 of the cabinet 1. In this embodiment, each holding member 11 comprises partly a mounting member fixed to the back wall 3 and comprising a suspension hook 33 and a horizontal supporting rod 34 as well as a guide stick 35 projecting in an upwardly inclined direction at a short distance above the suspension hook 33, partly a holding device 36 removably mountable in relation to the mounting member and having five projecting finger members 37 which, at one end, are set in a connecting part 38 for removable mounting on the suspension hook 33 of the mounting member in secured engagement therewith as will appear from the following description with reference to Figs. 6 and 7.

As it appears from Figs. 1 and 4, the holding device 36 is designed so that at mounting on a suspension hook 33 the finger members 37 are oriented in a substantially vertical plane to allow the closest possible arrangement of neighbouring holding devices 36 in each of the rows R1 to R5 and thus the least possible distance between the columns S1 to S5.

The projecting finger members 37 are formed of a wire material and designed so that they are slightly diverging in a hand-like shape as shown in Fig. 4. To ensure that each finger member results in the distension of the corresponding finger space in a protective glove which is optimum for the cleaning effect, each finger member 37 as shown in Fig. 4 is made as a double branch by a wire piece bent in a hairpin shape with the bend located at the distal end facing away from the connection part 38.

As also shown in Fig. 5, the mounting members secured to the back wall 3 are made so that the supporting rod 34 is at a greater distance from the back wall 3 than the suspension hook 33. This results in a slightly upwardly inclined orientation of the projecting holding devices 36, generally at an angle of 10-20° above horizontal. In conjunction with the sluicing direction determined by the shape and location of the nozzles 32, the shape and orientation of the holding devices 37 will ensure partly that the protective gloves placed on them are efficiently cleaned, partly that such gloves are secured firmly on the holding devices 37, also at the increased sluicing pressure during the pre-rinse.

While the dismountable holding devices 36 have the advantage that protective gloves can be arranged on them quickly and easily outside the cabinet 1, for example in connection with brief breaks during the work day, the projecting guide sticks 35 of the mounting members make it substantially easier to position the connecting part 38 of a holding device 36 with protective glove placed thereon when it is to be placed in engagement with a suspension hook 33.

In the embodiment shown, the connecting part 38 of each holding device 36 is preferably made of moulded plastic and, as shown in Figs. 6 and 7, as a lattice structure with a boat-like plane shape in which tubular setting cases 39 at the ends of the wire pieces are connected by lengthwise and transverse stays 40 and 41, respectively. In a bottom wall 42 in the slightly tapering one end, the connecting part 38 is designed partly with a slot 43 for engagement with a suspension hook 33 in one of the mounting members secured to the back wall 3 of the cabinet 1, partly with a triangle-like indentation 43' from the front edge for guiding abutment on the projecting guide stick 35 to ensure reliable and easy mounting of the connecting part on the suspension hook 33.

For engagement with the supporting rod 34 in the mounting member, at least one semicircular recess 45 is formed in longitudinal side walls 44 of the connecting part 38, the engagement of which recess with the supporting rod 34 results in firm securing of the connecting part 38 and thus the holding device 36 to the mounting member in the cabinet 1. To allow varying angular positions of the holding device 36, one or more additional recesses 45 may be formed in the lower edges of the side walls 44 as shown.

While the design of the holding devices 37 and the mounting members therefor described so far is intended for relatively short protective gloves for protection of hand and lower arm, one or more holding members 11' for protective gloves of greater length, so-called shoulder gloves, may be arranged in the cabinet 1 as shown by dotted lines in Fig. 1. Such holding members are preferably placed as shown with an upright column orientation and secured to the bottom wall 5 of the cabinet 1.

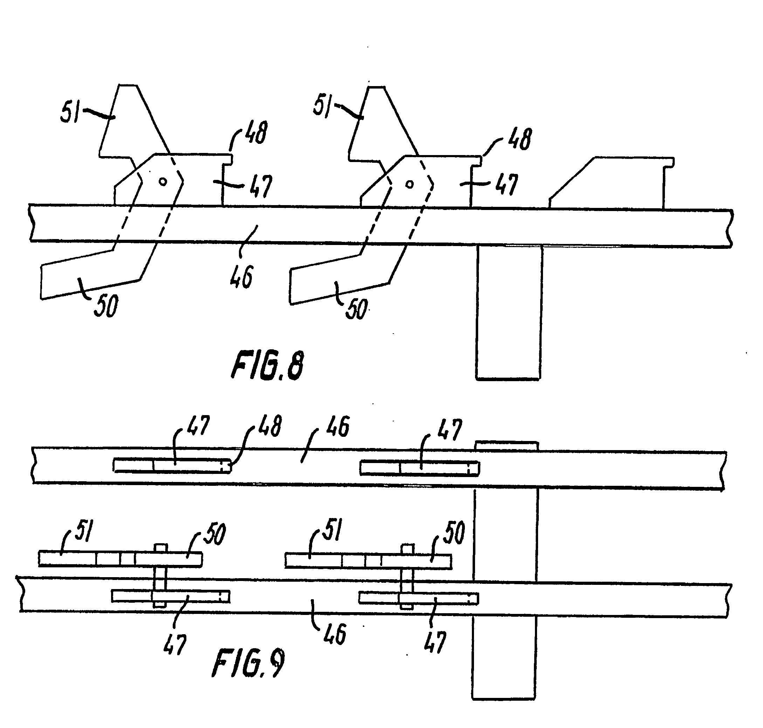

To enable such holding members to be provided by means of stationary mounting members in the cabinet 1 and holding devices removably mountable thereon of basically the same design, but substantially greater length than the holding devices 36, Figs. 8 and 9 show an embodiment of mounting members for firm securing of such holding devices of great length.

For this, as shown in Fig. 1, an arrangement of paired parallel mounting rails 46 may be fastened at the bottom of the cabinet 1, to which rails upright mounting flanges 47 are fastened, at the upper edge of one end of which a projecting hook member 48 is formed. For engagement with such hook members 48 on the two parallel mounting rails 46 of a rail pair, the upper edge of one of the side walls 44 of the connecting part 38 has two relatively flat rectangular recesses 49. A spring-loaded latch member 50 is swingably connected with the mounting flange 47 on one of the rails 46, which latch member forms a catch 51 for engagement with the upper edge of the second side wall 44 of the connecting part 38, the distance between the hook members 48 and the catch 51 being smaller than the width of the connecting part 38 between the outer sides of the side walls 44.

The connecting part 38 is thus brought into engagement with the mounting member so designed from above, whereby the latch member 50 may yield so far from the operative position shown that passage of the connecting part 38 for placing of recesses 39 in engagement with the hook members 38 is made possible, whereupon the latch member 50 is snapped into engagement with the opposite side wall 44 of the connecting part 38.

With the same design, the connecting part 38 may thus be used for holding devices for both short and long protective gloves.

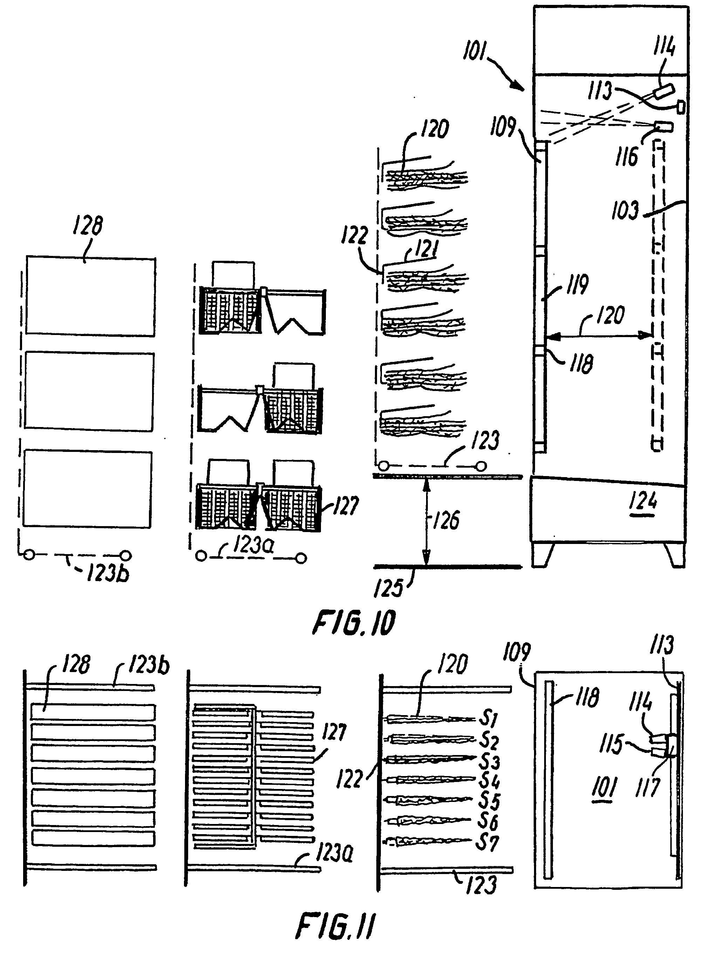

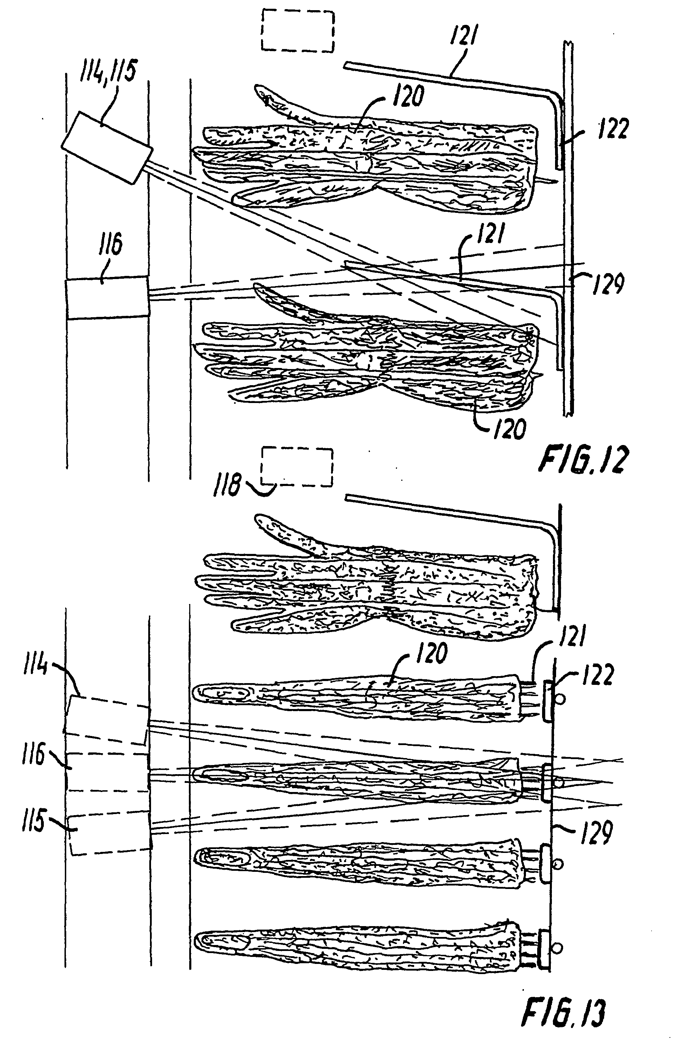

In purely schematic side and top views of the cabinet 101, Figs. 10 and 11 show an alternative cabinet design of a cleaning installation according to the invention with a modified sluicing system and holding members for different work utensils in the form of gloves, knives and cutting boards.

Instead of a high-pressure sluicing unit with carrier members in stationary connection with a main bar, the high-pressure sluicing unit thus comprises a main bar 113 with an arrangement of three nozzle-shaped sluicing members 114, 115 and 116, which are mounted displaceably on a carriage 117 horizontally reciprocateable along the main bar 113.

In this arrangement, the vertical movement of the main bar 113 along the entire height of the cabinet 101 extends in a vertical plane close to the back wall 103 of the cabinet 101. At the cleaning of protective gloves, the pre-rinse is carried out sequentially for each one of the columns, in this example seven columns S1-S7, at a time at an increased sluicing pressure as at the embodiment shown in Figs. 1 and 2, as the carriage 117 may be horizontally displaced along the main bar 113 from one column to the next, for example by means of a drive arrangement placed at the top of the work room 102 of the cabinet and comprising, for example, a driving carriage displaceable along a rotating threaded spindle and having a fork member which grips the carriage 117 at the upper extreme position of the main bar 113. For this purpose, the carriage 117 with such driving carriage can be provided with mutually cooperating means for accurate stopping of the carriage 116 at positions opposite the individual columns S1-S7.

This modification of the high-pressure sluicing unit substantially simplifies the control valve arrangement, as only a single hose connection, not shown, has to be passed from the carriage 117 to a single control valve, also not shown.

To ensure the desired reduction of the sluicing pressure in the washing or disinfection step of the cleaning process with this modification, a separate low-pressure sluicing system is used, comprising a number, in the example shown four, horizontally extending nozzle bars 118 each with a number of stationary sluicing nozzles, not shown, arranged in a joint supporting frame 119 which, as shown by the arrow 120, can be reciprocated between the back wall 103 and a position close to the front door 109 of the cabinet 101.

Figs. 10 and 11 also show how a number of lower arm protective gloves 120 are arranged on respective individual holding members 121 which, as described above and shown in Figs. 5 to 7, may be removably mounted on mounting members 122 which however, in this modified cabinet design, are arranged on a mobile trolley 123 which can be passed into and out of the cabinet 101 through the front door 109. If, for example for the purpose of placing pumps or containers for detergents in a lower cupboard 124, the lower edge of the front door 109 is raised above the floor level 125, a suitable, for example hydraulic lifting device may be associated with the cabinet 101 as shown by the arrow 126.

With the embodiment of Figs. 10 and 11, in addition to cleaning of protective gloves, the cabinet can thus alternatively be used for cleaning of other work utensils in the form of work knives, sharpening steels, cutting boards and protective aprons or mail coats. The figures thus show placement of work knives in conventional knife baskets 127, known per se, on an also mobile support trolley 123a and arrangement of cutting boards 128 suspended on a mobile support trolley 123b. When such other utensils are cleaned, the entire cleaning process, including the pre-rinse, can be carried out at a fairly low sluicing pressure.

As shown in more detail in Figs. 12 and 13, the protective gloves 120 of the embodiment of Figs. 10 and 11 are arranged in a substantially horizontally projecting orientation from an upright wall 129 on the trolley 123. To obtain efficient high-pressure pre-rinse the arrangement of high-pressure sluicing members on the carriage 117 movable along the bar 113 may comprise two top nozzles 114 and 115 which, as shown in Fig. 13, are placed symmetrically on respective sides of the glove 120 when the carriage 117 is positioned opposite to one of the columns S1-S6 with sluicing directions which, in the horizontal plane, are oriented obliquely inwards towards the opposite sides of the glove, while both the top nozzles 114 and 115 in the vertical plane are placed a distance above the glove in the column currently being sluiced with a sluicing direction oriented obliquely downwards towards the glove. A bottom nozzle 116 of the sluicing member arrangement is placed in the horizontal plane right between the top nozzles 114 and 115 and in the vertical plane at a suitable distance below the top nozzles 114 and 115.

In the embodiment shown in Figs. 10 to 13, the holding members for other work utensils than protective gloves may suitably be made as fixed holding members on the respective mobile support trolleys. For protective gloves, however, the dismountable design described provides substantial advantages in that arrangement of protective gloves on holding devices can be carried out outside the support trolley or the cabinet, and in that the cleaning of the holding devices themselves which are encumbered during operation with heavily contaminated sluicing water is substantially facilitated.

Furthermore, the cleaning process can be carried out in others way than as described as, for example, warm water can be used for the washing step, while a subsequent disinfecting step is carried out using hot water. Moreover, the rinse may comprise the addition of a surfactant and may be carried out in several steps.

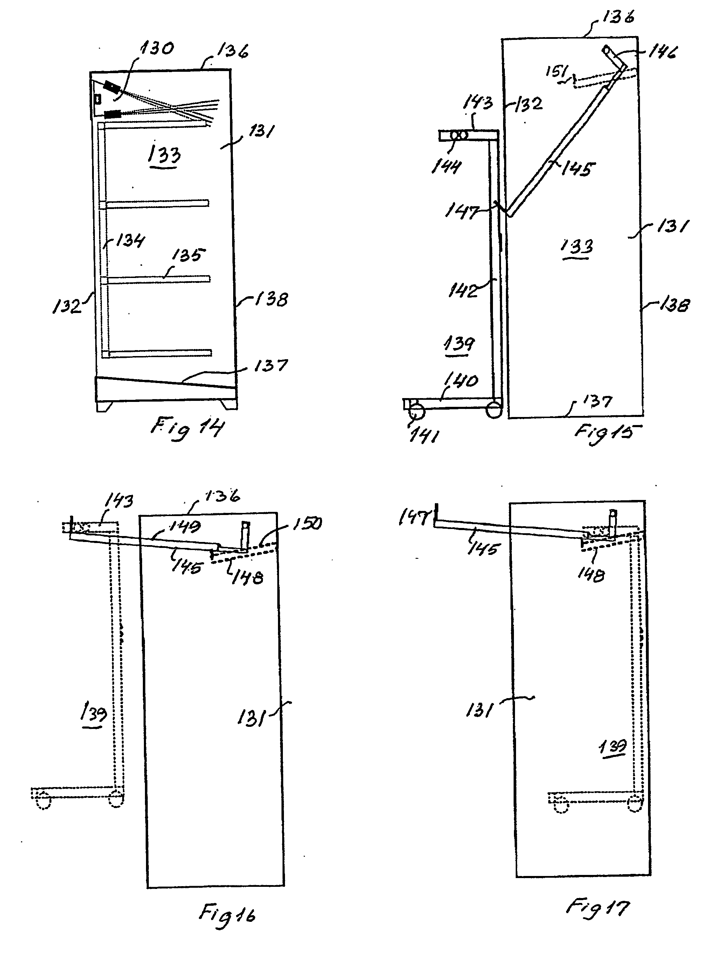

The purely schematic side views of Figs. 14 to 22 show an alternative embodiment of a cleaning cabinet as shown in Figs. 10 to 13.

As shown in Fig. 14, the high-pressure sluicing unit 130 with main bar and nozzle-shaped sluicing members is here arranged close to the front wall 132 of the cabinet 131 so that the vertical movement of the high-pressure sluicing unit extends in a vertical plane close to the front wall. The pre-rinse at increased sluicing pressure is otherwise carried out in the same way as described above with reference to Figs. 10 and 11.

In this embodiment, the separate low-pressure sluicing system comprises a frame configuration which, in its starting position, is placed close to the one side wall 133 of the cabinet 131 and comprises a vertical main bar 134 placed close to the front wall 132 and four horizontally extended nozzle bars 135 so that also the low-pressure sluicing unit moves during the washing, rinsing and disinfection processes in parallel with the front wall 132 of the cabinet with the nozzle bars 135 extending in between rows of work utensils arranged on a mobile support trolley passed into the cabinet 130 as explained below.

In addition to the front wall 132 and the side walls 133 the cabinet 131 comprises top and bottom walls 136 and 137 and a back wall 138. An access passage to and from the inside of the cabinet 130 is provided in the front wall 132 in a manner not shown in these figures by means of an openable front door.

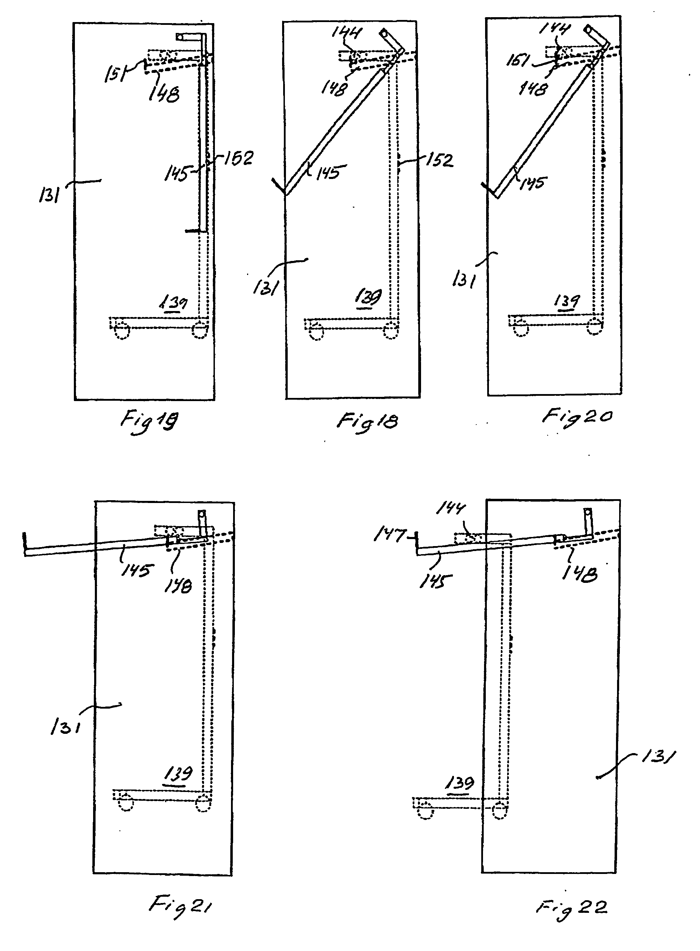

By means of holding members, not shown in detail, the work utensils to be cleaned, for example, protective gloves, protective aprons, cutting boards and/or work knives, are secured to a mobile support trolley 139 shown in Fig. 15 in a starting position just outside the access passage in the front wall 132 of the cabinet.

In the embodiment shown, the support trolley 139 comprises a lower part 140 with wheels 141, two or more vertical uprights 142 and an upper part 143 which is mounted at both sides with a set of projecting double support rollers 144 whose function will be described below.

In the top part of the cabinet 131 at each of the side walls 133, a lifting/lowering arrangement is mounted in the form of a relatively elongated lifting arm 145 which, at one end via an articulated arm 146, is swingably connected with the side wall 133 and at the other end carries an upright catch member 147 designed to engage with the upper part 143 of the support trolley 139, for example on the side of the support rollers 144 facing away from the cabinet 130.

By means of a suitable drive mechanism, not shown in detail, the support trolley 139 can be lifted as shown in Fig. 16 from the starting position of Fig. 15 to a lifted position where it is positioned outside the cabinet with the upper part 143 placed just below the top wall 136 of the cabinet. As shown, the lifting arms 145 in this position assume a position inclining slightly downwards towards the inside of the cabinet 131, for example at an angle of about 5° to the horizontal plane. The rotational axes of the lifting arms 145 are placed so that the innermost ends of the lifting arms 145 in this position correspond with a pair of projecting carrier beams 148 fastened to the back wall 138 of the cabinet 131 and inclining slightly downwards towards the front wall 132.

The lifting arms 145 being formed with upward running surfaces 149 for the support rollers 144 and the carrier beams 148 with upward corresponding engagement surfaces 150 for the support rollers 144, the support trolley 139 will roll by its own weight from the lifted position in Fig. 16 into the cabinet 131 until the support rollers 144 engage with the surfaces 150 on the carrier beams 148 as shown in Fig. 17.

From this position the lifting arms 145 can now be released from engagement with the upper part 143 of the support trolley 139. As a result of the downward inclination of the carrier beams 148, the support trolley 139 will thus roll a distance in the opposite direction until the support rollers 144 abut fixed end stops 151 on the carrier beams 148, and the lifting arms 145 can be swung in the opposite direction as shown in Figs. 18 and 19 to a fixed position in which they extend in parallel with and in front of the back wall 138 of the cabinet 131.

Projecting stops 152 for the lifting arms 145 being provided on the support trolley at the vertical uprights 142, this swinging movement of the lifting arms 145 in the opposite direction will take the support trolley 139 to the cleaning position inside the cabinet shown in Fig. 19.

A cleaning process as described above can now be carried out with the support trolley 139 placed in this position with the protective gloves, aprons, cutting boards and/or work knives secured to holding members associated with the support trolley.

After completion of the cleaning process the support trolley 139, as shown in Figs. 20, 21 and 22, is returned to the starting position shown in Fig. 15, the lifting arms 145 being swung up from the fixed position in Fig. 19 into engagement with the support rollers 144, which are resting against the end stops 152 of the carrier beams 148, and lifting the support rollers 144 free of these end stops, whereby the support trolley 139 can roll out of the cabinet 131 by its own weight.

## Claims

1. A method for cleaning protective gloves, particularly in the food industry, comprising positioning of a number of protective gloves (31;120) on mutually spaced, elongated holding members (11,11';121) with each holding members projecting into the inner cavity of the glove positioned thereon and retaining said holding members (11;121) in mainly stationary positions in a substantially closed cleaning installation (1;101) for the duration of a cleaning process including pre-rinsing, washing and rinsing steps conducted by substantially nozzle-shaped sluicing means (32;114-116) in the cleaning installation (1;101), **characterized by** arrangement of said holding members (11,11';121) and the protective gloves positioned thereon in a configuration of columns (S1-S5;S1-S7) in the cleaning installation (1;101) with the glove openings localized mainly in a common plane and conducting at least said pre-rinsing step sequentially for one column (S1-S5) at a time as a substantially directional sluicing from said sluicing means (32;114-116) at an elevated sluicing pressure of at least 60 bar, the orientation of the protective gloves (31;120) positioned on the holding members (11,11';121) and the sluicing direction being adapted for discharge of contaminated sluicing medium through the glove openings.

2. A method according to claim 1, **characterized in that** said pre-rinsing step is conducted by sequential actuatation of sluicing members (32) associated with the columns (S1-S5) of said configuration.

3. A method according to claim 1, **characterized in that** said pre-rinsing step is conducted by movement of a common arrangement of sluicing members (114-116) in a direction transverse to the columns (S1-S7) of said configuration.

4. A method according to claim 2 or 3, **characterized in that** said common plane is substantially vertical, and that a number of holding members (11;121) for hand and lower arm protective gloves (31) are arranged in said column configuration to project substantially in parallel from said vertical plane.

5. A method according to claims 2 and 4, **characterized in that** the holding members (11) project from said vertical plane with an upwardly inclined orientation, while the sluicing directions from said sequentially actuated sluicing members (32) are oriented substantially horizontally.

6. A method according to claims 3 and 4, **characterized in that** the holding members (121) project substantially horizontally from said vertical plane, while the sluicing directions from said common arrangement of sluicing members (114-116) are inclined in both the vertical and horizontal directions.

7. A method according to claim 2, **characterized in that** said common plane is mainly horizontal and that a number of holding members (11') for comparatively long shoulder protective gloves are arranged in a configuration of mainly vertically upright columns from said horizontal plane, whereas the sluicing directions from said sequentially actuated sluicing members (32) are oriented mainly horizontally.

8. A method according to claim 2, **characterized in that** all steps of the cleaning process are conducted by means of a common sluicing unit (12), said sequentially actuated sluicing members (32) being connected via flow connections (20, 21) with control valves (V6-V10) to a common control system (30).

9. A method according to any of the preceding claims, **characterized in that** at least said washing step is conducted at a lower sluicing pressure than said elevated sluicing pressure.

10. A method according to any of the preceding claims, **characterized by** the use of holding members (11) comprising mounting members (33-35) fixed in the cleaning installation and elongated holding devices (36) removably mountable on said mounting members and having connecting parts (38) for releasable engagement with said mounting members(33-35), so that the protective gloves (31) can be arranged on said holding devices (36) prior to mounting of the latter on said mounting members (33-35).

11. A system for cleaning protective gloves, particularly in the food industry, by carrying out the method according to any of the preceding claims, comprising a substantially closed cleaning installation (1;101) for stationary retaining mutually spaced, elongated holding members (11,11';121) for positioning of protective gloves (31;120) for the duration of a cleaning process comprising the steps of pre-rinsing, washing and rinsing conducted by substantially nozzle-shaped sluicing means (32;114-116) provided in said cleaning installation (1;101), **characterized in that** the holding members (11,11';121) are arranged in a configuration of columns (S1-S5;S1-S7) for retaining the protective gloves (31;120) with the glove openings localized in a common plane, and that the sluicing means (32;114-116) is connected with a high-pressure feeding unit (22) for sluicing medium and are controlled to conduct at least said pre-rinsing step sequentially for one column (S1-S5;S1-S7) at a time as a directional sluicing at an elevated sluicing pressure of at least 60 bar, the orientation of the holding members (11,11';121) and the protective gloves (31;120) positioned thereon and the sluicing direction being adapted for discharge of contaminated sluicing medium through the glove openings.

12. A system according to claim 11, **characterized in that** said sluicing means comprises an arrangement of sluicing members (32;114-116) in a common vertically movable sluicing unit (12;117).

13. A system according to claim 12, **characterized in that** said sluicing unit (12) comprises sequentially actuatable sluicing members (32) associated with the columns (S1-S5) of said configuration.

14. A system according to claim 12 or 13, **characterized in that** said plane is substantially vertical, and that a number of holding members (11;121) for relatively short hand and under arm protective gloves (31;120) are arranged in said column configuration to project substantially in parallel from said vertical plane.

15. A system according to claim 14, **characterized in that** the holding members (11) project from said vertical plane with an upwardly inclined orientation, while the sluicing directions from said sluicing members (32) are oriented substantially horizontally.

16. A system according to claim 12, **characterized in that** said sluicing unit (117) comprises an arrangement of sluicing members (114-116) that can be moved substantially horizontally in a direction transverse to the columns of said configuration.

17. A system according to claim 16, **characterized in that** the holding members (121) project substantially horizontally from said vertical plane, while the sluicing directions from said arrangement of sluicing members (114-116) are inclined in both the vertical and horizontal directions.

18. A system as claimed in claim 12 or 13, **characterized in that** said common plane is mainly horizontal, and that a number of holding members (11') for comparatively long shoulder protective gloves are arranged in a configuration ofs mainly vertically upright projecting columns from said horizontal plane, whereas the sluicing directions from said sluicing members (32) are oriented mainly horizontally.

19. A system according to any of claims 12 to 15 and 18, **characterized in that** said high-pressure feeding unit (22) is connected with said sluicing members (32) via flow connections (20, 21) with control valves (V6-V10) in connection with a common control system (22), which is programmed to conduct at least said washing step at a lower sluicing pressure than said elevated sluicing pressure and simultaneously for all columns (S1-S5) of said configuration.

20. A system according to any one of claims 12 to 15 and 18 to 19, **characterized in that** the common sluicing unit (12) comprises a substantially horizontal bar (13) movable in a substantially vertical plane outside the holding members (11,11') in connection with substantially horizontally projecting carrier members (14-19) for individual sluicing members (32), said carrier members (14-19) projecting between the holding members (11,11') arranged in said column configuration (S1-S5).

21. A system according to claim 20, **characterized in that** the projecting carrier members (14-19) for each column (S1-S5) of said column configuration comprise a pair of carrier members connected with said main bar (13) in stationary positions along it and provided with individual sluicing members (32) in connection with an individual control valve (V6-V10).

22. A system according to claim 16 or 17, **characterized in that** said arrangement of sluicing members (114-116) is mounted on a carriage (117) displaceable along a substantially horizontal bar (113), which is movable in a substantially vertical plane outside the holding members (121), and is connected with a single selectively actuatable control valve (V106).

23. A system according to claim 22, **characterized by** comprising a separate arrangement (118) of sluicing members to conduct sais washing step at a lower sluicing pressure that said elevated sluicing pressure.

24. A system according to any of claims 11 to 23, **characterized in that** the cleaning installation comprises an upright, substantially box-shaped cabinet (1; 101) having a working chamber (2) in which said holding members (33-38; 121) and sluicing members (12-19, 32; 113-119) are arranged, and an openable front door (9; 109) for said working chamber (2).

25. A system according to claim 24, **characterized in that** said holding members (11,11') comprise mounting members (33-35) fixed in said cabinet (1) and separate elongated holding devices (36) removably mountable on said mounting members and with connecting parts (38) for releasable engagement with the mounting members.

26. A system according to claims 14 and 25, **characterized in that** the mounting members comprise a first type of mounting members (33-35) placed in said column configuration (S1-S5, R1-R5) on a vertical back wall (3) of the cabinet (1) and designed for removable mounting and securing of the connecting parts (38) of the holding devices (36) to produce said upwardly inclined orientation.

27. A system according to claims 18 and 25, **characterized in that** the mounting members comprise a second type of mounting members (46-51) placed individually in said column configuration in connection with a bottom wall in the working chamber of the cabinet and designed for removable mounting and securing of the connecting parts (38) of the holding devices to produce said column orientation projecting vertically upwards.

28. A system according to claim 24, **characterized in that** the holding members (121) comprise mounting members (122) in connection with a mobile support trolley (123, 139), which can be passed into and out of the cabinet (101) through said front door (109).

29. A system according to claim 28, **characterized in that** the support trolley (139) comprises a lower part (140) provided with wheels (141) in connection with an upper part (143), that a cleaning position in the cabinet (131) is determined by carrier beams (148) projecting from a back wall (138) of the cabinet (131) in its upper part, whereby support members (144) in connection with the upper part (143) of the support trolley (139) are designed for resting abutment on said carrier beams (148), and that a lifting/lowering mechanism for the support trolley (139) comprises lifting arms (145), which are swingably mounted in the upper part of the cabinet (130) and have outer ends designed for gripping said upper part (143) of the support trolley (139) for the purpose of lifting it and for translational movement of the support trolley (139) towards the inside of the cabinet (130) for placing said support members (144) in abutment on the carrier beams (148).

30. A system according to claim 29, **characterized in that** the lifting arms (145) are designed and controlled for release from the engagement with the upper part (143) of the support trolley (139) after placing of the support members (144) in abutment on the carrier beams (148) and for swinging into a fixed position inside the cabinet (131) in continuation of said release and securing in said fixed position during the cleaning process.

31. A system according to claim 29 or 30, **characterized in that** said support members comprise support rollers (144) in connection with the upper part (143) of the support trolley (139), and that the lifting arms (145) in an upper, swung-out position with said outer ends projecting outside the cabinet (131) in engagement with the upper part (143) of the support trolley (139) are inclined downwards towards the inside of the cabinet (139), whereby the lifting arms (145) also form running surfaces (149) for said support rollers (144), while inner ends of the lifting arms (145) near their swingable mounting in the upper part of the cabinet (130) join abutment surfaces (150) on the carrier beams (148), and that stop members (151) for the support rollers (144) are formed at outer ends of the carrier beams (148).

32. A system according to claims 30 and 31, **characterized in that** the support trolley (139) is designed, between the upper part (143) and the lower part, with an abutment panel (152) for the lifting arms (145) for the purpose of fixed securing of the support trolley (139) during the cleaning process by means of the lifting arms (145) in their said fixed position.

## Patentansprüche

1. Verfahren zur Reinigung von Schutzhandschuhen, insbesondere in der Nahrungsmittelindustrie, umfassend die Anordnung einer Anzahl von Schutzhandschuhen (31; 120) an gegenseitig beabstandeten, länglichen Halterungseinrichtungen (11,11';121), wobei jedes Halterungseinrichtung in den inneren Hohlraum des daran angeordneten Handschuhs hineinragt, sowie die Festhaltung der Halterungseinrichtungen (11;121) in vorwiegend ortsfesten Positionen in einer im Wesentlichen geschlossenen Reinigungsinstallation (1;101) während eines Reinigungsvorgangs umfassend die Schritte der Vorspülung, des Waschens und der Nachspülung, welche Schritte durch im Wesentlichen düsenförmige Spülmittel (32; 114-116) in der Reinigungsinstallation durchgeführt werden, **dadurch gekennzeichnet**, dass die Halterungseinrichtungen (11,11';121) und die daran angebrachten Schutzhandschuhe in einer Säulenkonfiguration (S1-S5;S1-S7) in der Reinigungsinstallation (1; 101) angeordnet sind, wobei die Handschuhöffnungen sich vorwiegend in einer gemeinsamen Ebene befinden, und dass zumindest die Vorspülung sequentiell für je eine Säule (S1-S5) nacheinander als eine im Wesentlichen gezielte Spülung von den Spülmitteln (32;114-116) bei einem erhöhten Spüldruck von mindestens 60 bar durchgeführt wird, wobei die Ausrichtung der an den Halterungseinrichtungen (11, 11'; 121) angeordneten Schutzhandschuhe (31; 120) und die Spülrichtung so angepasst sind, dass kontaminiertes Spülmedium durch die Handschuhöffnungen abgeleitet wird.

2. Verfahren nach Anspruch 1, **dadurch gekennzeichnet, dass** die Vorspülung durch sequentielle Betätigung von mit den Säulen (S1-S5) der Säulenkonfiguration verbundenen Spülelementen (32) durchgeführt wird.

3. Verfahren nach Anspruch 1, **dadurch gekennzeichnet, dass** die Vorspülung durch Bewegung einer gemeinsamen Anordnung von Spülelementen (114-116) in eine Richtung quer zu den Säulen (S1-S7) der Säulenkonfiguration durchgeführt wird.

4. Verfahren nach Anspruch 2 oder 3, **dadurch gekennzeichnet, dass** die gemeinsame Ebene im Wesentlichen vertikal ist, und dass eine Anzahl von Halterungseinrichtungen (11;121) für Schutzhandschuhe zum Schutz von Hand und Unterarm (31) in der Säulenkonfiguration, parallel von der vertikalen Ebene hervorstehend, angeordnet sind.

5. Verfahren nach Anspruch 2 und 4, **dadurch gekennzeichnet, dass** die Halterungseinrichtungen von der vertikalen Ebene (11) in einer nach oben geneigten Ausrichtung hervorstehen, wobei die Spülrichtungen der sequentiell betätigten Spülelemente (32) im Wesentlichen horizontal gerichtet sind.

6. Verfahren nach Anspruch 3 und 4, **dadurch gekennzeichnet, dass** die Halterungseinrichtungen (121) im Wesentlichen horizontal von der vertikalen Ebene hervorstehen, wobei die Spülrichtungen der gemeinsamen Anordnung von Spülelementen (114-116) in sowohl vertikaler als auch horizontaler Richtung geneigt sind.

7. Verfahren nach Anspruch 2, **dadurch gekennzeichnet, dass** die gemeinsame Ebene vorwiegend horizontal ist, und dass eine Anzahl von Halterungseinrichtungen (11') für vergleichsweise lange Schutzhandschuhe zum Schutz von Schultern in einer Konfiguration von vorwiegend von der horizontalen Ebene vertikal aufragenden Säulen angeordnet sind, wobei die Spülrichtungen der sequentiell betätigten Spülelemente (32) vorwiegend horizontal gerichtet sind.

8. Verfahren nach Anspruch 2, **dadurch gekennzeichnet, dass** alle Schritte des Reinigungsvorgangs mittels einer gemeinsamen Spüleinheit (12) durchgeführt werden, wobei die sequentiell betätigten Spülelemente (32) über Strömungsverbindungen (20, 21) mit Steuerventilen (V6-V10) an ein gemeinsames Steuersystem (30) angeschlossen sind.

9. Verfahren nach einem der vorhergehenden Ansprüche, **dadurch gekennzeichnet, dass** zumindest der Waschvorgang bei einem niedrigeren Spüldruck als dem erhöhten Spüldruck durchgeführt wird.

10. Verfahren nach einem der vorhergehenden Ansprüche, **gekennzeichnet durch** die Anwendung von Halterungseinrichtungen (11), die in der Reinigungsinstallation fixierte Befestigungseinrichtungen (33-35) und an den Befestigungseinrichtungen lösbar montierbare, längliche Haltevorrichtungen (36) umfassen und Verbindungselemente (38) zum auslösbaren Eingriff mit den Befestigungseinrichtungen (33-35) aufweisen, so dass die Schutzhandschuhe (31) vor der Befestigung der Haltevorrichtungen (36) an den Befestigungseinrichtungen (33-35) an den Haltevorrichtungen angeordnet werden können.

11. Vorrichtung zur Reinigung von Schutzhandschuhen, insbesondere in der Nahrungsmittelindustrie, bei Durchführung des Verfahrens nach einem der vorhergehenden Ansprüche, umfassend eine im Wesentlichen geschlossene Reinigungsinstallation (1;101) zur ortsfesten Festhaltung gegenseitig beabstandeter, länglicher Halterungseinrichtungen (11,11';121) zur Anordnung von Schutzhandschuhen (31;120) während eines Reinigungsvorgangs umfassend die Schritte der Vorspülung, des Waschens und der Nachspülung, die durch in der Reinigungsinstallation (1;101) vorgesehene, im Wesentlichen düsenförmige Spülmittel (32;114-116) durchgeführt werden, **dadurch gekennzeichnet**, dass die Halterungseinrichtungen (11,11';121) zur Festhaltung der Schutzhandschuhe (31;120) in einer Säulenkonfiguration (S1-S5; S1-S7) angeordnet sind, wobei die Handschuhöffnungen sich in einer gemeinsamen Ebene befinden, und dass die Spülmittel (32;114-116) mit einer Hochdruck-Zufuhreinheit (22) für Spülmedium verbunden sind und zur Durchführung von zumindest dem Vorspülungsvorgang sequentiell für je eine Säule (S1-S5;S1-S7) nacheinander als eine gezielte Spülung bei einem erhöhten Spüldruck von mindestens 60 bar angesteuert werden, wobei die Ausrichtung der Halterungseinrichtungen (11, 11'; 121) und der daran angebrachten Schutzhandschuhe (31;120) und die Spülrichtung so angepasst sind, dass kontaminiertes Spülmedium durch die Handschuhöffnungen abgeleitet wird.

12. Vorrichtung nach Anspruch 11, **dadurch gekennzeichnet, dass** das Spülmittel eine Anordnung von Spülelementen (32;114-116) in einer gemeinsamen, vertikal beweglichen Spüleinheit (12;117) umfasst.

13. Vorrichtung nach Anspruch 12, **dadurch gekennzeichnet, dass** die Spüleinheit (12) sequentiell aktivierbare, mit den Säulen (S1-S5) der Säulenkonfiguration verbundene Spülelemente (32) umfasst.

14. Vorrichtung nach Anspruch 12 or 13, **dadurch gekennzeichnet, dass** die erwähnte Ebene im Wesentlichen vertikal ist, und dass eine Anzahl von Halterungseinrichtungen (11;121) für vergleichsweise kurze Schutzhandschuhe zum Schutz von Hand und Unterarm (31;120) in der Säulenkonfiguration angeordnet sind, wobei sie im Wesentlichen parallel von der vertikalen Ebene hervorstehen.

15. Vorrichtung nach Anspruch 14, **dadurch gekennzeichnet, dass** die Halterungseinrichtungen (11) von der vertikalen Ebene in einer nach oben geneigten Ausrichtung hervorstehen, wobei die Spülrichtungen der Spülelemente (32) im Wesentlichen horizontal gerichtet sind.

16. Vorrichtung nach Anspruch 12, **dadurch gekennzeichnet, dass** die Spüleinheit (117) eine Anordnung von im Wesentlichen horizontal in eine Richtung quer zu den Säulen der Säulenkonfiguration beweglichen Spülelementen (114-116) umfasst.

17. Vorrichtung nach Anspruch 16, **dadurch gekennzeichnet, dass** die Halterungseinrichtungen (121) im Wesentlichen horizontal von der vertikalen Ebene hervorstehen, wobei die Spülrichtungen der Anordnung von Spülelementen (114-116) in sowohl vertikaler als auch horizontaler Richtung geneigt sind.

18. Vorrichtung nach Anspruch 12 oder 13, **dadurch gekennzeichnet, dass** die gemeinsame Ebene vorwiegend horizontal ist, und dass eine Anzahl von Halterungseinrichtungen (11') für vergleichsweise lange Schutzhandschuhe zum Schutz von Schultern in einer Konfiguration von Säulen angeordnet sind, die von der horizontalen Ebene vorwiegend vertikal aufragen, wobei die Spülrichtungen der Spülelemente (32) vorwiegend horizontal gerichtet sind.

19. Vorrichtung nach einem der Ansprüche 12 bis 15 und 18, **dadurch gekennzeichnet, dass** die Hochdruck-Zufuhreinheit (22) über Strömungselemente (20,21) mit Steuerventilen (V6-V10) mit den Spülelementen (32) in Verbindung mit einem gemeinsamen Steuersystem (22) verbunden ist, das zur Durchführung von zumindest dem Waschvorgang bei einem niedrigeren Spüldruck als dem erhöhten Spüldruck und gleichzeitig für alle Säulen (S1-S5) der Konfiguration programmiert ist.

20. Vorrichtung nach einem der Ansprüche 12 bis 15 und 18 und 19, **dadurch gekennzeichnet, dass** die gemeinsame Spüleinheit (12) einen im Wesentlichen horizontalen Balken (13) umfasst, der in einer im Wesentlichen vertikalen Ebene außerhalb der Halterungseinrichtungen (11,11') in Verbindung mit im Wesentlichen horizontal hervorstehenden Tragelementen (14-19) für individuelle Spülelemente (32) beweglich ist, wobei die Tragelemente (14-19) zwischen die in der genannten Säulenkonfiguration (S1-S5) angeordneten Halterungseinrichtungen (11,11') hineinragen.

21. Vorrichtung nach Anspruch 20, **dadurch gekennzeichnet, dass** die hineinragenden Tragelemente (14-19) für jede Säule (S1-S5) der Säulenkonfiguration ein Paar von Tragelementen umfassen, die in ortsfesten Positionen entlang dem Hauptbalken (13) mit diesem verbunden und mit individuellen Spülelementen (32) in Verbindung mit einem individuellen Steuerventil (V6-V10) versehen sind.

22. Vorrichtung nach Anspruch 16 oder 17, **dadurch gekennzeichnet, dass** die Anordnung von Spülelementen (114-116) an einem entlang einem im Wesentlichen horizontalen Balken (113) verschiebbaren Schlitten (177) befestigt ist, der außerhalb der Halterungseinrichtungen (121) in einer im Wesentlichen vertikalen Ebene beweglich und mit einem einzelnen, wahlweise betätigbaren Steuerventil (V106) verbunden ist.

23. Vorrichtung nach Anspruch 22, **dadurch gekennzeichnet, dass** es eine separate Anordnung (118) von Spülelementen zur Durchführung des Waschvorgangs bei einem niedrigeren Spüldruck als dem erhöhten Spüldruck umfasst.

24. Vorrichtung nach einem der Ansprüche 11 bis 23, **dadurch gekennzeichnet, dass** die Reinigungsinstallation ein aufrechtstehendes, im Wesentlichen kastenförmiges Gehäuse (1; 101) umfasst, das eine Arbeitskammer (2), in welcher die Halterungseinrichtungen (33-38; 121) und die Spülelemente (12-19, 32; 113-119) angeordnet sind, und eine aufschließbare Fronttür (9; 109) für die Arbeitskammer (2) aufweist.

25. Vorrichtung nach Anspruch 24, **dadurch gekennzeichnet, dass** die Halterungseinrichtungen (11,11') Befestigungseinrichtungen (33-35) umfassen, die im Gehäuse (1) fixiert sind, und separate, an den Befestigungseinrichtungen lösbar montierbare, längliche Haltevorrichtungen (36) mit Verbindungselementen (38) zum auslösbaren Eingriff mit den Befestigungseinrichtungen aufweisen.

26. Vorrichtung nach Anspruch 14 und 25, **dadurch gekennzeichnet, dass** die Befestigungseinrichtungen eine erste Art von Befestigungseinrichtungen (33-35) umfassen, die in der Säulenkonfiguration (S1-S5, R1-R5) an einer vertikalen Hinterwand (3) des Gehäuses (1) angeordnet und zur lösbaren Befestigung und Festhaltung der Verbindungselemente (38) der Haltevorrichtungen (36) zur Erzeugung der nach oben geneigten Ausrichtung ausgebildet sind.

27. Vorrichtung nach Anspruch 18 und 25, **dadurch gekennzeichnet, dass** die Befestigungseinrichtungen eine zweite Art von Befestigungseinrichtungen (46-51) umfassen, die in der Säulenkonfiguration in Verbindung mit einer Bodenwand in der Arbeitskammer des Gehäuses einzeln angeordnet und zur lösbaren Befestigung und Festhaltung der Verbindungselemente (38) der Haltevorrichtungen (36) zur Erzeugung der vertikal nach oben ragenden Säulenausrichtung ausgebildet sind.

28. Vorrichtung nach Anspruch 24, **dadurch gekennzeichnet, dass** die Halterungseinrichtungen (121) Befestigungseinrichtungen (122) in Verbindung mit einem fahrbaren Tragwagen (123, 139) umfassen, der durch die Fronttür (109) in das Gehäuse und aus dem Gehäuse (101) geführt werden kann.

29. Vorrichtung nach Anspruch 28, **dadurch gekennzeichnet, dass** der Tragwagen (139) ein mit Rädern (141) versehenes unteres Teil (140) in Verbindung mit einem oberen Teil (143) umfasst, dass eine Reinigungsposition im Gehäuse (131) durch von einer Hinterwand (138) des Gehäuses (131) in sein oberes Teil ragende Trägerbalken (148) festgelegt wird, wobei Unterstützungselemente (144) in Verbindung mit dem oberen Teil (143) des Tragwagens (139) zur stetigen Angrenzung an die Trägerbalken (148) ausgebildet sind, und dass ein Hebe-/Absenkmechanismus für den Tragwagen (139) Hebelarme (145) umfasst, die im oberen Teil des Gehäuses (130) schwenkbar montiert sind sowie Außenenden aufweisen, die zum Erfassen des oberen Teils (143) des Tragwagens (139) zur dessen Anhebung und zur translatorischen Bewegung des Tragwagens (139) in Richtung des Gehäuseinneren (130) zur Anordnung der Unterstützungselemente (144) in Angrenzung an die Trägerbalken (148) ausgebildet sind.

30. Vorrichtung nach Anspruch 29, **dadurch gekennzeichnet, dass** die Hebelarme (145) zur Freigabe aus dem Eingriff mit dem oberen Teil (143) des Tragwagens (139) nach Anordnung der Unterstützungselemente (144) in Angrenzung an die Trägerbalken (148) und zur Schwenkung in eine fixe Position im Gehäuseinneren (131) im Anschluss an die Freigabe und zur Sicherung in der fixen Position während des Reinigungsvorgangs ausgebildet und angesteuert sind.

31. Vorrichtung nach Anspruch 29 oder 30, **dadurch gekennzeichnet, dass** die Unterstützungselemente Stützrollen (144) in Verbindung mit dem oberen Teil (143) des Tragwagens (139) umfassen, und dass die Hebelarme (145) in einer oberen, ausgeschwenkten Position, mit den Außenenden aus dem Gehäuse (131) in Eingriff mit dem oberen Teil (143) des Tragwagens (139) ragend, nach unten in Richtung des Gehäuseinneren (139) geneigt sind, wobei die Hebelarme (145) auch Laufflächen (149) für die Stützrollen (144) bilden, wobei Innenenden der Hebelarme (145) nahe ihrer schwenkbaren Befestigung im oberen Teil des Gehäuses (130) sich an Anlageflächen (150) an den Trägerbalken (148) anschließen, und dass an Außenenden der Trägerbalken (148) Anschlagelemente (151) für die Stützrollen (144) gebildet sind.

32. Vorrichtung nach Anspruch 30 und 31, **dadurch gekennzeichnet, dass** der Tragwagen (139) zwischen dem oberen Teil (143) und dem unteren Teil mit einem Anlagepaneel (152) für die Hebelarme (145) zur festen Montage des Tragwagens (139) während des Reinigungsvorgangs mittels der Hebelarme (145) in ihrer festen Position ausgebildet ist.

## Revendications

1. Procédé pour nettoyer des gants de protection, en particulier dans l'industrie alimentaire, comprenant le positionnement d'un nombre de gants de protection (31;120) sur des organes porteurs (11,11';121) allongés et espacés mutuellement, chaque organe porteur s'avançant dans la cavité intérieure du gant positionné sur celui-ci, et la retenue desdits organes porteurs (11;121) dans des positions essentiellement fixes dans une installation de nettoyage sensiblement fermée (1;101) au cours d'un procédé de nettoyage comprenant des étapes de pré-rinçage, de lavage et de rinçage réalisées par des moyens de nettoyage (32;114-116) sensiblement en forme de buses dans l'installation de nettoyage (1;101), **caractérisé par** la mise en place desdits organes porteurs (11,11';121) et des gants de protection positionnés sur ceux-ci dans une configuration de colonnes (S1-S5;S1-S7) dans l'installation de nettoyage (1;101), les ouvertures des gants étant localisées essentiellement dans un plan commun, et la réalisation d'au moins ladite étape de pré-rinçage séquentiellement pour une colonne (S1-S5) à la fois sous forme d'un nettoyage sensiblement dans une direction déterminée à partir desdits moyens de nettoyage (32;114-116) à une pression de nettoyage élevée d'au moins 60 bars, l'orientation des gants de protection (31;120) positionnés sur les organes porteurs (11,11';121) et la direction de nettoyage étant adaptées à l'évacuation de l'agent de nettoyage contaminé à travers les ouvertures des gants.

2. Procédé selon la revendication 1, **caractérisé en ce que** ladite étape de pré-rinçage est réalisée en actionnant séquentiellement des organes de nettoyage (32) associés aux colonnes (S1-S5) de ladite configuration.

3. Procédé selon la revendication 1, **caractérisé en ce que** ladite étape de pré-rinçage est réalisée en déplaçant une disposition commune d'organes de nettoyage (114-116) dans une direction transversale par rapport aux colonnes (S1-S7) de ladite configuration.

4. Procédé selon la revendication 2 ou 3, **caractérisé en ce que** ledit plan commun est sensiblement vertical, et **en ce qu'**un nombre d'organes porteurs (11;121) pour des gants de protection de la main et de l'avant-bras (31) sont disposés dans ladite configuration de colonnes de manière à s'avancer sensiblement en parallèle à partir dudit plan vertical.

5. Procédé selon les revendications 2 et 4, **caractérisé en ce que** les organes porteurs (11) s'avancent à partir dudit plan vertical en ayant une orientation inclinée vers le haut, tandis que les directions de nettoyage à partir desdits organes de nettoyage (32) actionnés séquentiellement sont orientées sensiblement horizontalement.

6. Procédé selon les revendications 3 et 4, **caractérisé en ce que** les organes porteurs (121) s'avancent sensiblement horizontalement à partir dudit plan vertical, tandis que les directions de nettoyage à partir de ladite disposition commune d'organes de nettoyage (114-116) sont inclinées aussi bien dans les directions verticales qu'horizontales.

7. Procédé selon la revendication 2, **caractérisé en ce que** ledit plan commun est essentiellement horizontal, et **en ce qu'**un nombre d'organes porteurs (11') pour des gants relativement longs de protection de l'épaule sont disposés dans une configuration de colonnes qui s'avancent essentiellement verticalement vers le haut à partir dudit plan horizontal, tandis que les directions de nettoyage à partir desdits organes de nettoyage (32) actionnés séquentiellement sont orientées essentiellement horizontalement.

8. Procédé selon la revendication 2, **caractérisé en ce que** toutes les étapes du procédé de nettoyage sont réalisées au moyen d'une unité de nettoyage commune (12), lesdits organes de nettoyage (32) actionnés séquentiellement étant reliés à un système de commande commun (30) par l'intermédiaire de liaisons d'écoulement (20, 21) présentant des soupapes de commande (V6-V10).

9. Procédé selon l'une quelconque des revendications précédentes, **caractérisé en ce qu'**au moins ladite étape de lavage est réalisée à une pression de nettoyage inférieure à ladite pression de nettoyage élevée.

10. Procédé selon l'une quelconque des revendications précédentes, **caractérisé par** l'utilisation d'organes porteurs (11) comprenant des dispositifs de montage (33-35) fixés dans l'installation de nettoyage et des dispositifs porteurs allongés (36) qui sont aptes à être montés de manière amovible sur lesdits dispositifs de montage et présentent des pièces de liaison (38) destinées à l'engagement débrayable avec lesdits dispositifs de montage (33-35), de manière à permettre la mise en place des gants de protection (31) sur lesdits dispositifs porteurs (36) avant le montage de ces derniers sur lesdits dispositifs de montage (33-35).

11. Système pour nettoyer des gants de protection, en particulier dans l'industrie alimentaire, en effectuant le procédé selon l'une quelconque des revendications précédentes, comprenant une installation de nettoyage (1;101) sensiblement fermée pour la retenue fixe d'organes porteurs (11,11';121) allongés et espacés mutuellement destinés au positionnement de gants de protection (31;120) au cours d'un procédé de nettoyage comprenant les étapes de pré-rinçage, de lavage et de rinçage réalisées par des moyens de nettoyage (32;114-116) sensiblement en forme de buses prévus dans ladite l'installation de nettoyage (1;101), **caractérisé en ce que** les organes porteurs (11,11';121) sont disposés dans une configuration de colonnes (S1-S5;S1-S7) pour retenir les gants de protection (31;120), les ouvertures des gants étant localisées dans un plan commun, et **en ce que** le moyen de nettoyage (32;114-116) est relié à une unité d'alimentation haute pression (22) pour l'agent de nettoyage et commandé pour réaliser au moins ladite étape de pré-rinçage séquentiellement pour une colonne (S1-S5;S1-S7) à la fois sous forme d'un nettoyage dans une direction déterminée à une pression de nettoyage élevée d'au moins 60 bars, l'orientation des organes porteurs (11,11';121) et des gants de protection (31;120) positionnés sur ceux-ci et la direction de nettoyage étant adaptées à l'évacuation de l'agent de nettoyage contaminé à travers les ouvertures des gants.

12. Système selon la revendication 11, **caractérisé en ce que** ledit moyen de nettoyage comprend une disposition d'organes de nettoyage (32;114-116) dans une unité de nettoyage commune et verticalement mobile (12;117).

13. Système selon la revendication 12, **caractérisé en ce que** ladite unité de nettoyage (12) comprend des organes de nettoyage (32) qui sont susceptibles d'être actionnés séquentiellement et sont associés aux colonnes (S1-S5) de ladite configuration.

14. Système selon la revendication 12 ou 13, **caractérisé en ce que** ledit plan est sensiblement vertical, et **en ce qu'**un nombre d'organes porteurs (11;121) pour des gants relativement courts de protection de la main et de l'avant-bras (31;120) sont disposés dans ladite configuration de colonnes de manière à s'avancer sensiblement en parallèle à partir dudit plan vertical.

15. Système selon la revendication 14, **caractérisé en ce que** les organes porteurs (11) s'avancent à partir dudit plan vertical en ayant une orientation inclinée vers le haut, tandis que les directions de nettoyage à partir desdits organes de nettoyage (32) sont orientées sensiblement horizontalement.

16. Système selon la revendication 12, **caractérisé en ce que** ladite unité de nettoyage (117) comprend une disposition d'organes de nettoyage (114-116) qui est apte à être déplacée sensiblement horizontalement dans une direction transversale par rapport aux colonnes de ladite configuration.

17. Système selon la revendication 16, **caractérisé en ce que** les organes porteurs (121) s'avancent sensiblement horizontalement à partir dudit plan vertical, tandis que les directions de nettoyage à partir de ladite disposition d'organes de nettoyage (114-116) sont inclinées aussi bien dans les directions verticales qu'horizontales.

18. Système selon la revendication 12 ou 13, **caractérisé en ce que** ledit plan commun est essentiellement horizontal, et **en ce qu'**un nombre d'organes porteurs (11') pour des gants relativement longs de protection dé l'épaule sont disposés dans une configuration de colonnes qui s'avancent essentiellement verticalement vers le haut à partir dudit plan horizontal, tandis que les directions de nettoyage à partir desdits organes de nettoyage (32) sont orientées essentiellement horizontalement.

19. Système selon l'une quelconque des revendications 12 à 15 et 18, **caractérisé en ce que** ladite unité d'alimentation haute pression (22) est reliée auxdits organes de nettoyage (32) par l'intermédiaire de liaisons d'écoulement (20, 21) présentant des soupapes de commande (V6-V10) en liaison avec un système de commande commun (22) qui est programmé pour réaliser au moins ladite étape de lavage à une pression de nettoyage inférieure à ladite pression de nettoyage élevée et simultanément pour toutes les colonnes (S1-S5) de ladite configuration.

20. Système selon l'une quelconque des revendications 12 à 15 et 18 à 19, **caractérisé en ce que** ce que l'unité de nettoyage commune (12) comprend une barre sensiblement horizontale (13) mobile dans un plan sensiblement vertical à l'extérieur des organes porteurs (11,11') en liaison avec des éléments de support (14-19) qui s'avancent sensiblement horizontalement et sont prévus pour des organes de nettoyage individuels (32), lesdits éléments de support (14-19) s'avançant entre les organes porteurs (11,11') disposés dans ladite configuration de colonnes (S1-S5).

21. Système selon la revendication 20, **caractérisé en ce que** les éléments de support saillants (14-19) pour chaque colonne (S1-S5) de ladite configuration de colonnes comprennent une paire d'éléments de support reliés à ladite barre principale (13) dans des positions fixes le long de celle-ci et pourvus d'organes de nettoyage individuels (32) en liaison avec une soupape de commande individuelle (V6-V10).

22. Système selon la revendication 16 ou 17, **caractérisé en ce que** ladite disposition d'organes de nettoyage (114-116) est montée sur un chariot (117) déplaçable le long d'une barre sensiblement horizontale (113), ledit chariot étant mobile dans un plan sensiblement vertical à l'extérieur des organes porteurs (121), et est reliée à une seule soupape de commande (V106) susceptible d'être actionnée sélectivement.

23. Système selon la revendication 22, **caractérisé en ce qu'**il comprend une disposition séparée (118) d'organes de nettoyage destinée à réaliser ladite étape de lavage à une pression de nettoyage inférieure à ladite pression de nettoyage élevée.

24. Système selon l'une quelconque des revendications 11 à 23, **caractérisé en ce que** l'installation de nettoyage comprend un caisson (1;101) sensiblement vertical présentant une chambre de travail (2) dans laquelle lesdits organes porteurs (33-38; 121) et organes de nettoyage (12-19, 32; 113-119) sont disposés et une porte de face ouvrante (9; 109) pour ladite chambre de travail (2).

25. Système selon la revendication 24, **caractérisé en ce que** lesdits organes porteurs (11,11') comprennent des dispositifs de montage (33-35) fixés dans ledit caisson (1) et des dispositifs porteurs allongés séparés (36) qui sont aptes à être montés de manière amovible sur lesdits dispositifs de montage et présentent des pièces de liaison (38) destinées à l'engagement débrayable avec lesdits dispositifs de montage.

26. Système selon les revendications 14 et 25, **caractérisé en ce que** les dispositifs de montage comprennent un premier type de dispositifs de montage (33-35) placés dans ladite configuration de colonnes (S1-S5, R1-R5) sur une paroi arrière verticale (3) du caisson (1) et conçus pour être montés de manière amovible et retenir les pièces de liaison (38) des dispositifs porteurs (36) en vue de produire ladite orientation inclinée vers le haut.

27. Système selon les revendications 18 et 25, **caractérisé en ce que** les dispositifs de montage comprennent un deuxième type de dispositifs de montage (46-51) placés individuellement dans ladite configuration de colonnes en liaison avec une paroi de fond dans la chambre de travail du caisson et conçus pour être montés de manière amovible et retenir les pièces de liaison (38) des dispositifs porteurs en vue de produire ladite orientation de colonnes s'avançant verticalement vers le haut.

28. Système selon la revendication 24, **caractérisé en ce que** les organes porteurs (121) comprennent des dispositifs de montage (122) en liaison avec un chariot de support mobile (123, 139) qui est susceptible d'être introduit dans le caisson (101) et sorti de celui-ci à travers ladite porte de face (109).

29. Système selon la revendication 28, **caractérisé en ce que** le chariot de support (139) comprend une partie inférieure (140) pourvue de roues (141) en liaison avec une partie supérieure (143), **en ce qu'**une position de nettoyage dans le caisson (131) est déterminée par des tiges porteuses (148) s'avançant à partir d'une paroi arrière (138) du caisson (131) dans sa partie supérieure, des organes de support (144) en liaison avec la partie supérieure (143) du chariot de support (139) étant ainsi conçus pour l'appui reposant sur lesdites tiges porteuses (148), et **en ce qu'**un mécanisme de levage/d'abaissement pour le chariot de support (139) comprend des bras de levier (145) qui sont montés à pivotement dans la partie supérieure du caisson (130) et présentent des extrémités extérieures conçues pour saisir ladite partie supérieure (143) du chariot de support (139) en vue de le lever et de déplacer le chariot de support (139) en translation vers l'intérieur du caisson (130) pour placer lesdits organes de support (144) en appui sur les tiges porteuses (148).

30. Système selon la revendication 29, **caractérisé en ce que** les bras de levier (145) sont conçus et commandés pour se dégager de l'engagement avec la partie supérieure (143) du chariot de support (139) après la mise en place des organes de support (144) en appui sur les tiges porteuses (148) et pour pivoter dans une position fixée à l'intérieur du caisson (131) à la suite dudit dégagement et être retenus dans ladite position fixée au cours du procédé de nettoyage.

31. Système selon la revendication 29 ou 30, **caractérisé en ce que** lesdits organes de support comprennent des galets de support (144) en liaison avec la partie supérieure (143) du chariot de support (139), et **en ce que** les bras de levier (145), dans une position supérieure pivotée vers l'extérieur où lesdites extrémités extérieures s'avancent hors du caisson (131) et sont en engagement avec la partie supérieure (143) du chariot de support (139), sont inclinés vers le bas vers l'intérieur du caisson (139), les bras de levier (145) formant ainsi également des surfaces de roulement (149) pour lesdits galets de support (144), tandis que des extrémités intérieures des bras de levier (145) à proximité de leur montage à pivotement dans la partie supérieure du caisson (130) réunissent des surfaces d'appui (150) sur les tiges porteuses (148), et **en ce que** des éléments d'arrêt (151) pour les galets de support (144) sont réalisés à des extrémités extérieures des tiges porteuses (148).

32. Système selon les revendications 30 et 31, **caractérisé en ce qu'**entre sa partie supérieure (143) et sa partie inférieure, le chariot de support (139) est conçu avec un panneau d'appui (152) pour les bras de levier (145) en vue de permettre la retenue fixée du chariot de support (139) au cours du procédé de nettoyage au moyen des bras de levier (145) dans leur position fixée susdite.
